# EUROPEAN PATENT SPECIFICATION

(11) **EP 4 087 319 B1**
(45) Date of publication and mention of the grant of the patent: **19.03.2025**
(21) Application number: 22171525.3
(22) Date of filing: 04.05.2022
(51) Int. Cl.: H04W 48/18, H04W 36/00, H04W 48/12

(54) **UE PROVISION OF SLICE INFORMATION FOR IMPROVED NETWORK SLICE SELECTION DURING INTER RAT TRANSFERS**
BEREITSTELLUNG VON SCHICHTINFORMATIONEN EINES BENUTZERGERÄTES ZUR VERBESSERTEN NETZWERKSCHICHTAUSWAHL WÄHREND ÜBERTRAGUNGEN ZWISCHEN DIREKTZUGRIFFSTECHNOLOGIEN
ÉQUIPEMENT UTILISATEUR POUR LA FOURNITURE D'INFORMATIONS DE TRANCHE POUR UNE SÉLECTION DE TRANCHE DE RÉSEAU AMÉLIORÉE PENDANT LES TRANSFERTS INTER-RAT

(30) Priority: 06.05.2021 US 202163185226 P; 02.02.2022 US 202217591473
(43) Date of publication of application: 09.11.2022
(73) Proprietor: Apple Inc., Cupertino CA 95014 (US)
(72) Inventor: SOLIMAN, Ahmed, M., Cupertino, 95014 (US); KISS, Krisztian, Cupertino, 95014 (US); ZAUS, Robert, Cupertino, 95014 (US); KODALI, Sree Ram, Cupertino, 95014 (US)
(74) Representative: Wardle, Callum Tarn

(56) References cited:
- WO-A1-2021/069056
- US-A1- 2019 116 526
- "3rd Generation Partnership Project; Technical Specification Group Services and System Aspects; Study on Enhancement of Network Slicing (Release 16)", 3GPP STANDARD; TECHNICAL REPORT; 3GPP TR 23.740, no. V0.6.0, 1 November 2018 (2018-11-01), pages 1 - 68, XP051487725

## Description

### FIELD

The invention relates to wireless communications, and more particularly to apparatuses and methods for a user equipment device (UE) to provide network slice information to a cellular network for improved operation during inter RAT transfers.

### DESCRIPTION OF THE RELATED ART

Wireless communication systems are rapidly growing in usage. In recent years, wireless devices such as smart phones and tablet computers have become increasingly sophisticated. Wireless devices such as smart phones support telephony and in addition provide access to the Internet, email, text messaging, and navigation using the global positioning system (GPS), and are capable of operating sophisticated applications that utilize these functionalities.

Some examples of wireless communication standards include GSM, UMTS (associated with, for example, WCDMA or TD-SCDMA air interfaces), LTE, LTE Advanced (LTE-A), HSPA, 3GPP2 CDMA2000 (e.g., 1xRTT, 1xEV-DO, HRPD, eHRPD), IEEE 802.11 (WLAN or Wi-Fi), IEEE 802.16 (WiMAX), Bluetooth, and others.

Long Term Evolution (LTE) is a fairly recent standard that is supported by the majority of wireless network operators worldwide, providing mobile broadband data and high-speed Internet access to their subscriber base. LTE defines a number of downlink (DL) physical channels, categorized as transport or control channels, to carry information blocks received from medium access control (MAC) and higher layers. LTE also defines a number of physical layer channels for the uplink (UL).

A proposed next telecommunications standard moving beyond the current International Mobile Telecommunications-Advanced (IMT-Advanced) Standards is called 5th generation mobile networks or 5th generation wireless systems, or 5G for short (otherwise known as 5G-NR for 5G New Radio, also simply referred to as NR). 5G-NR proposes a higher capacity for a higher density of mobile broadband users, also supporting device-to-device, ultra-reliable, and massive machine communications, as well as lower latency and lower battery consumption, than current LTE standards. Further, the 5G-NR standard may allow for less restrictive UE scheduling as compared to current LTE standards. Consequently, efforts are being made in ongoing developments of 5G-NR to take advantage of higher throughputs possible at higher frequencies.

As demand for wireless communication systems grows and new use cases for wireless communication arise, there is a seemingly continual need to develop next generation wireless communication techniques and standards. One such developing concept may include network slicing, which may allow a network operator to create different "network slices" configured to address different wireless communication use cases and scenarios in a customized manner.

US 2019/116526 A1 describes a communication device for handling a packet data network (PDN) connection and a network slice comprises at least one storage device; and at least one processing circuit, coupled to the at least one storage device.

WO 2021/069056 A1 describes provisioning and enforcement of network slice information in a communication network.

### SUMMARY

The scope of the invention is defined by the appended independent claims. Further embodiments are defined in their respective dependent claims.

Embodiments relate to wireless communications, and more particularly to apparatuses and methods for a user equipment device (UE) to provide slice related information to a first cellular network that does not support network slicing. This slice related information may assist the network in providing the appropriate network slice selection assistance information (NSSAI) to the UE for use during subsequent inter RAT transfers to a different cellular network that does support network slicing.

A user equipment (UE) may comprise a radio, one or more antennas, and a processor. The UE may be configured to initiate an application on the UE while connected with a first cellular network, wherein the first cellular network may not support network slicing. The UE may then determine slice related information for the application, and provide the slice related information to the first cellular network, such as in a PDN Connectivity Request. The slice related information may comprise a proposed S-NSSAI, or alternatively may comprise an identifier of a specific network slice customer (NSC). The first cellular network may use the slice related information to determine an "appropriate" or "correct" S-NSSAI to provide back to the UE. The UE may then receive this "correct" S-NSSAI from the first cellular network, wherein the "correct" S-NSSAI was determined based at least in part on the slice related information provided by the UE to the first cellular network.

The S-NSSAI may be useable when the UE transitions to a second cellular network that does support network slicing. For example, the UE may transition from the first cellular network (e.g., a 4G Network) to a second cellular network (e.g., a 5G network) that supports network slicing. This transition may comprise a packet data unit (PDU) session between the UE and the second cellular network (e.g., where the PDN established in the 4G Network is mapped to a PDU session in the 5G Network). When this transition occurs, both the UE and the second cellular network may link the "correct" S-NSSAI (received from the first cellular network) with the PDU session between the UE and the second cellular network. This may provide an improved user experience.

A network device in the first cellular network may be configured to perform various of the first cellular network operations described above. For example, the network device may be configured to receive a packet data network (PDN) connectivity request message from the UE, wherein the PDN connectivity request message includes slice related information associated with a packet data protocol (PDP) context between the UE and the cellular network. The network device may then determine a "correct" single network slice selection assistance information (S-NSSAI) for the PDP context based at least in part on one or more of: 1) the slice related information received from the UE; and/or 2) core logic in the cellular network. The network device may then transmit the correct S-NSSAI to the UE, wherein the correct S-NSSAI is useable when UE transitions to a second cellular network that does support network slicing.

A UE may be configured to transmit a packet data network (PDN) connectivity request to a first cellular network, wherein the first cellular network does not support network slicing. The UE then may receive a message from the first cellular network, wherein the message comprises a list of a plurality of possible single network slice selection assistance information sets (S-NSSAIs). The UE may then select a desired S-NSSAI from the list of the plurality of possible S-NSSAIs. The selected S-NSSAI may be useable when the UE transitions from the first cellular network to a second cellular network that supports network slicing.

The UE may transmit the selected S-NSSAI to the first cellular network. When the UE moves to a second cellular network that supports network slicing, the UE may transmit the selected S-NSSAI to the second cellular network. The UE may transmit a Radio Resource Control (RRC) connection establishment message to the second cellular network, wherein the RRC connection establishment message comprises the selected S-NSSAI for use by the second cellular network. When the UE transitions from the first to the second cellular network, both the UE and the second cellular network may link the S-NSSAI received from the first cellular network with a PDU session between the UE and the second cellular network.

A network device in the first cellular network may be configured to perform various of the first cellular network operations described above. For example, the network device may be configured to receive a packet data network (PDN) connectivity request from a UE. The network device may then transmit a message to the UE comprising a list of a plurality of possible single network slice selection assistance information sets (S-NSSAIs). The network device may then receive a first S-NSSAI from the UE, wherein the first S-NSSAI is selected from the list of the plurality of possible S-NSSAIs. The first (selected) S-NSSAI is useable for when the UE transitions from the first cellular network to a second cellular network that supports network slicing.

The techniques described herein may be implemented in and/or used with a number of different types of devices, including but not limited to unmanned aerial vehicles (UAVs), unmanned aerial controllers (UACs), base stations, access points, cellular phones, tablet computers, wearable computing devices, portable media players, automobiles and/or motorized vehicles, and any of various other computing devices.

This Summary is intended to provide a brief overview of some of the subject matter described in this document. Accordingly, it will be appreciated that the above-described features are merely examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of various embodiments is considered in conjunction with the following drawings, in which:
Figure 1 illustrates an example wireless communication system;
Figure 2 illustrates an example of a base station (BS) and an access point in communication with a user equipment (UE) device;
Figure 3 illustrates an example block diagram of a UE according to some embodiments;
Figure 4 illustrates an example block diagram of a network element according to some embodiments;
Figure 5 illustrates an example block diagram of cellular communication circuitry;
Figure 6A illustrates an example of connections between an EPC network, an LTE base station (eNB), and a 5G NR base station (gNB);
Figure 6B illustrates an example of a protocol stack for an eNB and a gNB;
Figure 7 illustrates a UE conducting multiple PDU sessions with network slices;
Figure 8 illustrates an example structure of a slice identifier (S-NSSAI);
Figure 9 is a flowchart diagram illustrating a method where a UE provides slice related information to a first cellular network (e.g., 4G Network), according to some embodiments;
Figure 10 is a flowchart diagram illustrating operation of the first cellular network receiving slice related information from the UE, according to some embodiments;
Figure 11 is a high-level flow diagram showing interaction between a UE and the first cellular network, where the UE provides a proposed S-NSSAI and the network responds with an "appropriate" S-NSSAI;
Figure 12 is a high-level flow diagram showing interaction between a UE and the first cellular network, where the network provides a list of possible S-NSSAIs and the UE selects an appropriate S-NSSAI for provision to either the first (4G) or a second (5G) network; and
Figure 13 is a flowchart diagram illustrating operation of a UE when transitioning to a second (5G) cellular network.

Specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the scope of the subject matter as defined by the appended claims.

### DETAILED DESCRIPTION

### Acronyms

Various acronyms are used throughout the present disclosure. Definitions of the most prominently used acronyms that may appear throughout the present disclosure are provided below:
- **3GPP:** Third Generation Partnership Project
- **TS:** Technical Specification
- **RAN:** Radio Access Network
- **RAT:** Radio Access Technology
- **UE:** User Equipment
- **RF:** Radio Frequency
- **BS:** Base Station
- **DL:** Downlink
- **UL:** Uplink
- **LTE:** Long Term Evolution
- **NR:** New Radio
- **5GS:** 5G System
- **5GMM:** 5GS Mobility Management
- **5GC:** 5G Core Network
- **IE:** Information Element
- **APN:** Access Point Name
- **NG-RAN:** Next Generation Radio Access Network
- **S-NSSAI:** Single Network Slice Selection Assistance Information
- **NSSF:** Network Slice Selection
- **AMF:** Core Access and Mobility Management Function
- **SMF:** Session Management Function
- **UPF:** User Plane Function
- **SST:** Slice / service type
- **SD:** Slice Differentiator
- **URSP:** UE Route Selection Policy

### Terms

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Programmable Hardware Element** - includes various hardware devices comprising multiple programmable function blocks connected via a programmable interconnect. Examples include FPGAs (Field Programmable Gate Arrays), PLDs (Programmable Logic Devices), FPOAs (Field Programmable Object Arrays), and CPLDs (Complex PLDs). The programmable function blocks may range from fine grained (combinatorial logic or look up tables) to coarse grained (arithmetic logic units or processor cores). A programmable hardware element may also be referred to as "reconfigurable logic".

**Computer System (or Computer)** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (or combination of devices) having at least one processor that executes instructions from a memory medium.

**User Equipment (UE) (or "UE Device")** - any of various types of computer systems devices which are mobile or portable and which performs wireless communications. Examples of UE devices include mobile telephones or smart phones (e.g., iPhone^{™}, Android^{™}-based phones), portable gaming devices (e.g., Nintendo DS^{™}, PlayStation Portable^{™}, Gameboy Advance^{™}, iPhone^{™}), laptops, wearable devices (e.g. smart watch, smart glasses), PDAs, portable Internet devices, music players, data storage devices, other handheld devices, automobiles and/or motor vehicles, unmanned aerial vehicles (UAVs) (e.g., drones), UAV controllers (UACs), and so forth. In general, the term "UE" or "UE device" can be broadly defined to encompass any electronic, computing, and/or telecommunications device (or combination of devices) which is easily transported by (or with) a user and capable of wireless communication.

**Base Station** - The term "Base Station" has the full breadth of its ordinary meaning, and at least includes a wireless communication station installed at a fixed location and used to communicate as part of a wireless telephone system or radio system.

**Processing Element (or Processor)** - refers to various elements or combinations of elements that are capable of performing a function in a device, such as a user equipment or a cellular network device. Processing elements may include, for example: processors and associated memory, portions or circuits of individual processor cores, entire processor cores, processor arrays, circuits such as an ASIC (Application Specific Integrated Circuit), programmable hardware elements such as a field programmable gate array (FPGA), as well any of various combinations of the above.

**Channel** - a medium used to convey information from a sender (transmitter) to a receiver. It should be noted that since characteristics of the term "channel" may differ according to different wireless protocols, the term "channel" as used herein may be considered as being used in a manner that is consistent with the standard of the type of device with reference to which the term is used. In some standards, channel widths may be variable (e.g., depending on device capability, band conditions, etc.). For example, LTE may support scalable channel bandwidths from 1.4 MHz to 20MHz. In contrast, WLAN channels may be 22MHz wide while Bluetooth channels may be 1Mhz wide. Other protocols and standards may include different definitions of channels. Furthermore, some standards may define and use multiple types of channels, e.g., different channels for uplink or downlink and/or different channels for different uses such as data, control information, etc.

**Band** - The term "band" has the full breadth of its ordinary meaning, and at least includes a section of spectrum (e.g., radio frequency spectrum) in which channels are used or set aside for the same purpose.

**Wi-Fi** - The term "Wi-Fi" has the full breadth of its ordinary meaning, and at least includes a wireless communication network or RAT that is serviced by wireless LAN (WLAN) access points and which provides connectivity through these access points to the Internet. Most modern Wi-Fi networks (or WLAN networks) are based on IEEE 802.11 standards and are marketed under the name "Wi-Fi". A Wi-Fi (WLAN) network is different from a cellular network.

**Automatically** - refers to an action or operation performed by a computer system (e.g., software executed by the computer system) or device (e.g., circuitry, programmable hardware elements, ASICs, etc.), without user input directly specifying or performing the action or operation. Thus the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**Approximately** - refers to a value that is almost correct or exact. For example, approximately may refer to a value that is within 1 to 10 percent of the exact (or desired) value. It should be noted, however, that the actual threshold value (or tolerance) may be application dependent. For example, in some embodiments, "approximately" may mean within 0.1% of some specified or desired value, while in various other embodiments, the threshold may be, for example, 2%, 3%, 5%, and so forth, as desired or as required by the particular application.

**Concurrent** - refers to parallel execution or performance, where tasks, processes, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.

Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

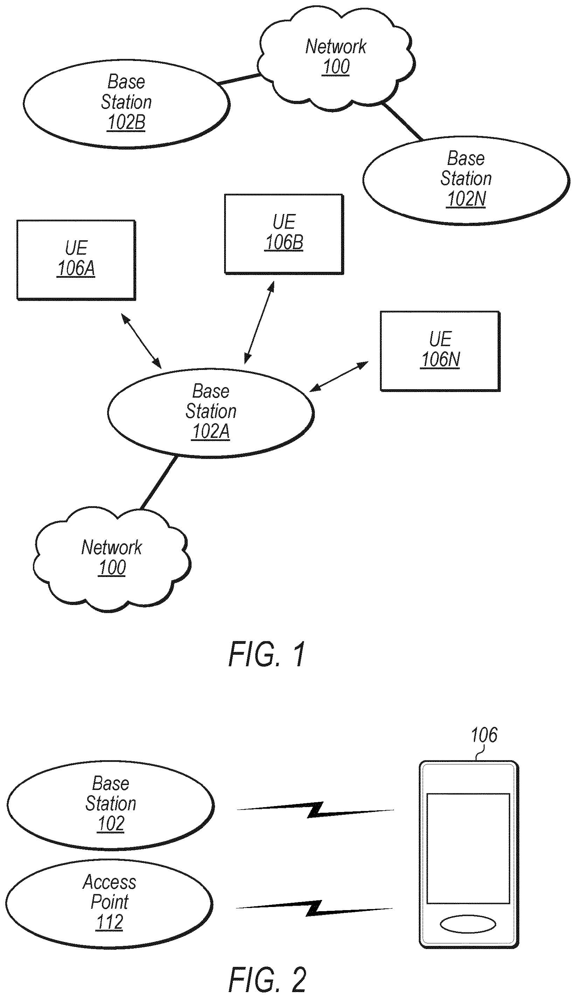

### Figures 1 and 2 - Communication Systems

Figure 1 illustrates a simplified example wireless communication system, according to some embodiments. It is noted that the system of Figure 1 is merely one example of a possible system, and that features of this disclosure may be implemented in any of various systems, as desired.

As shown, the example wireless communication system includes a base station 102A which communicates over a transmission medium with one or more user devices 106A, 106B, etc., through 106N. Each of the user devices may be referred to herein as a "user equipment" (UE). Thus, the user devices 106 are referred to as UEs or UE devices.

The base station (BS) 102A may be a base transceiver station (BTS) or cell site (a "cellular base station") and may include hardware that enables wireless communication with the UEs 106A through 106N.

The communication area (or coverage area) of the base station may be referred to as a "cell." The base station 102A and the UEs 106 may be configured to communicate over the transmission medium using any of various radio access technologies (RATs), also referred to as wireless communication technologies, or telecommunication standards, such as GSM, UMTS (associated with, for example, WCDMA or TD-SCDMA air interfaces), LTE, LTE-Advanced (LTE-A), 5G new radio (5G NR), HSPA, 3GPP2 CDMA2000 (e.g., 1xRTT, 1xEV-DO, HRPD, eHRPD), etc. Note that if the base station 102A is implemented in the context of LTE, it may alternately be referred to as an 'eNodeB' or 'eNB'. Note that if the base station 102A is implemented in the context of 5G NR, it may alternately be referred to as 'gNodeB' or 'gNB'.

As shown, the base station 102A may also be equipped to communicate with a network 100 (e.g., a core network of a cellular service provider, a telecommunication network such as a public switched telephone network (PSTN), and/or the Internet, among various possibilities). Thus, the base station 102A may facilitate communication between the user devices and/or between the user devices and the network 100. In particular, the cellular base station 102A may provide UEs 106 with various telecommunication capabilities, such as voice, SMS and/or data services.

Base station 102A and other similar base stations (such as base stations 102B...102N) operating according to the same or a different cellular communication standard may thus be provided as a network of cells, which may provide continuous or nearly continuous overlapping service to UEs 106A-N and similar devices over a geographic area via one or more cellular communication standards.

Thus, while base station 102A may act as a "serving cell" for UEs 106A-N as illustrated in Figure 1, each UE 106 may also be capable of receiving signals from (and possibly within communication range of) one or more other cells (which might be provided by base stations 102B-N and/or any other base stations), which may be referred to as "neighboring cells". Such cells may also be capable of facilitating communication between user devices and/or between user devices and the network 100. Such cells may include "macro" cells, "micro" cells, "pico" cells, and/or cells which provide any of various other granularities of service area size. For example, base stations 102A-B illustrated in Figure 1 might be macro cells, while base station 102N might be a micro cell. Other configurations are also possible.

In some embodiments, base station 102A may be a next generation base station, e.g., a 5G New Radio (5G NR) base station, or "gNB". In some embodiments, a gNB may be connected to a legacy evolved packet core (EPC) network and/or to a NR core (NRC) network. In addition, a gNB cell may include one or more transition and reception points (TRPs). In addition, a UE capable of operating according to 5G NR may be connected to one or more TRPs within one or more gNBs.

Note that a UE 106 may be capable of communicating using multiple wireless communication standards. For example, the UE 106 may be configured to communicate using a wireless networking (e.g., Wi-Fi) and/or peer-to-peer wireless communication protocol (e.g., Bluetooth, Wi-Fi peer-to-peer, etc.) in addition to at least one cellular communication protocol (e.g., GSM, UMTS (associated with, for example, WCDMA or TD-SCDMA air interfaces), LTE, LTE-A, 5G NR, HSPA, 3GPP2 CDMA2000 (e.g., 1xRTT, 1xEV-DO, HRPD, eHRPD), etc.). The UE 106 may also or alternatively be configured to communicate using one or more global navigational satellite systems (GNSS, e.g., GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

Figure 2 illustrates user equipment 106 (e.g., one of the devices 106A through 106N) in communication with a base station 102 and an access point 112, according to some embodiments. The UE 106 may be a device with both cellular communication capability and non-cellular communication capability (e.g., Bluetooth, Wi-Fi, and so forth) such as a mobile phone, a hand-held device, a computer or a tablet, or virtually any type of wireless device.

The UE 106 may include a processor that is configured to execute program instructions stored in memory. The UE 106 may perform any of the method embodiments described herein by executing such stored instructions. Alternatively, or in addition, the UE 106 may include a programmable hardware element such as an FPGA (fieldprogrammable gate array) that is configured to perform any of the method embodiments described herein, or any portion of any of the method embodiments described herein.

The UE 106 may include one or more antennas for communicating using one or more wireless communication protocols or technologies. In some embodiments, the UE 106 may be configured to communicate using, for example, CDMA2000 (1xRTT / 1xEV-DO / HRPD / eHRPD), LTE/LTE-Advanced, or 5G NR using a single shared radio and/or GSM, LTE, LTE-Advanced, or 5G NR using the single shared radio. The shared radio may couple to a single antenna, or may couple to multiple antennas (e.g., for MIMO) for performing wireless communications. In general, a radio may include any combination of a baseband processor, analog RF signal processing circuitry (e.g., including filters, mixers, oscillators, amplifiers, etc.), or digital processing circuitry (e.g., for digital modulation as well as other digital processing). Similarly, the radio may implement one or more receive and transmit chains using the aforementioned hardware. For example, the UE 106 may share one or more parts of a receive and/or transmit chain between multiple wireless communication technologies, such as those discussed above.

In some embodiments, the UE 106 may include separate transmit and/or receive chains (e.g., including separate antennas and other radio components) for each wireless communication protocol with which it is configured to communicate. As a further possibility, the UE 106 may include one or more radios which are shared between multiple wireless communication protocols, and one or more radios which are used exclusively by a single wireless communication protocol. For example, the UE 106 might include a shared radio for communicating using either of LTE or 5G NR (or LTE or 1xRTTor LTE or GSM), and separate radios for communicating using each of Wi-Fi and Bluetooth. Other configurations are also possible.

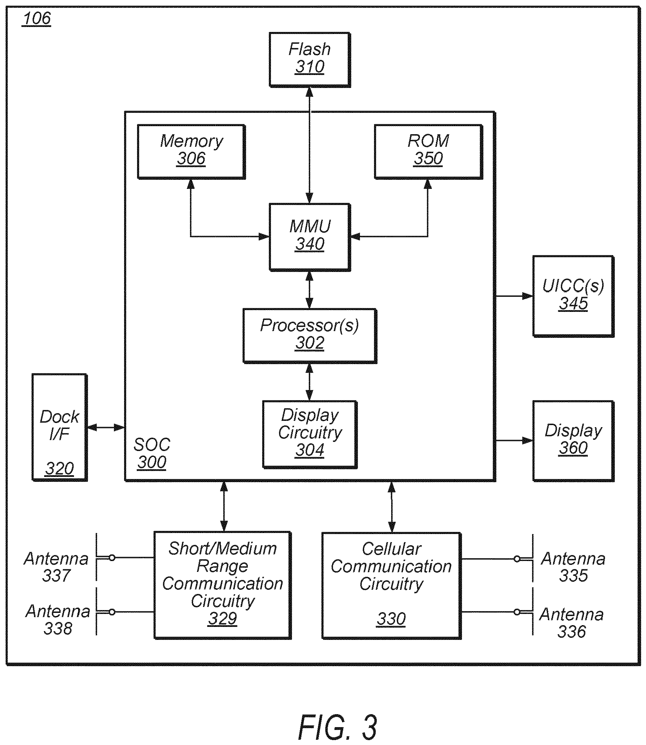

### Figure 3 - UE Block Diagram

Figure 3 illustrates an example simplified block diagram of a communication device 106, according to some embodiments. It is noted that the block diagram of the communication device of Figure 3 is only one example of a possible communication device. According to embodiments, communication device 106 may be a user equipment (UE) device, a mobile device or mobile station, a wireless device or wireless station, a desktop computer or computing device, a mobile computing device (e.g., a laptop, notebook, or portable computing device), a tablet, an unmanned aerial vehicle (UAV), a UAV controller (UAC) and/or a combination of devices, among other devices. As shown, the communication device 106 may include a set of components 300 configured to perform core functions. For example, this set of components may be implemented as a system on chip (SOC), which may include portions for various purposes. Alternatively, this set of components 300 may be implemented as separate components or groups of components for the various purposes. The set of components 300 may be coupled (e.g., communicatively; directly or indirectly) to various other circuits of the communication device 106.

For example, the communication device 106 may include various types of memory (e.g., including NAND Flash 310), an input/output interface such as connector I/F 320 (e.g., for connecting to a computer system; dock; charging station; input devices, such as a microphone, camera, keyboard; output devices, such as speakers; etc.), the display 360, which may be integrated with or external to the communication device 106, and cellular communication circuitry 330 such as for 5G NR, LTE, GSM, etc., and short to medium range wireless communication circuitry 329 (e.g., Bluetooth^{™} and WLAN circuitry). In some embodiments, communication device 106 may include wired communication circuitry (not shown), such as a network interface card, e.g., for Ethernet.

The cellular communication circuitry 330 may couple (e.g., communicatively; directly or indirectly) to one or more antennas, such as antennas 335 and 336 as shown. The short to medium range wireless communication circuitry 329 may also couple (e.g., communicatively; directly or indirectly) to one or more antennas, such as antennas 337 and 338 as shown. Alternatively, the short to medium range wireless communication circuitry 329 may couple (e.g., communicatively; directly or indirectly) to the antennas 335 and 336 in addition to, or instead of, coupling (e.g., communicatively; directly or indirectly) to the antennas 337 and 338. The short to medium range wireless communication circuitry 329 and/or cellular communication circuitry 330 may include multiple receive chains and/or multiple transmit chains for receiving and/or transmitting multiple spatial streams, such as in a multiple-input multiple output (MIMO) configuration.

In some embodiments, as further described below, cellular communication circuitry 330 may include dedicated receive chains (including and/or coupled to, e.g., communicatively; directly or indirectly. dedicated processors and/or radios) for multiple RATs (e.g., a first receive chain for LTE and a second receive chain for 5G NR). In addition, in some embodiments, cellular communication circuitry 330 may include a single transmit chain that may be switched between radios dedicated to specific RATs. For example, a first radio may be dedicated to a first RAT, e.g., LTE, and may be in communication with a dedicated receive chain and a transmit chain shared with an additional radio, e.g., a second radio that may be dedicated to a second RAT, e.g., 5G NR, and may be in communication with a dedicated receive chain and the shared transmit chain.

The communication device 106 may also include and/or be configured for use with one or more user interface elements. The user interface elements may include any of various elements, such as display 360 (which may be a touchscreen display), a keyboard (which may be a discrete keyboard or may be implemented as part of a touchscreen display), a mouse, a microphone and/or speakers, one or more cameras, one or more buttons, and/or any of various other elements capable of providing information to a user and/or receiving or interpreting user input.

The communication device 106 may further include one or more smart cards 345 that include SIM (Subscriber Identity Module) functionality, such as one or more UICC(s) (Universal Integrated Circuit Card(s)) cards 345. Note that the term "SIM" or "SIM entity" is intended to include any of various types of SIM implementations or SIM functionality, such as the one or more UICC(s) cards 345, one or more eUICCs, one or more eSIMs, either removable or embedded, etc. In some embodiments, the UE 106 may include a combination of removable smart cards and fixed/non-removable smart cards (such as one or more eUICC cards that implement eSIM functionality), as desired. For example, the UE 106 may comprise two embedded SIMs, two removable SIMs, or a combination of one embedded SIMs and one removable SIMs. Various other SIM configurations are also contemplated.

In some embodiments, the UE 106 may include two or more SIMs. The inclusion of two or more SIMs in the UE 106 may allow the UE 106 to support two different telephone numbers and may allow the UE 106 to communicate on corresponding two or more respective networks. For example, a first SIM may support a first RAT such as LTE, and a second SIM 310 support a second RAT such as 5G NR. Other implementations and RATs are of course possible. In some embodiments, when the UE 106 comprises two SIMs, the UE 106 may support Dual SIM Dual Active (DSDA) functionality. The DSDA functionality may allow the UE 106 to be simultaneously connected to two networks (and use two different RATs) at the same time, or to simultaneously maintain two connections supported by two different SIMs using the same or different RATs on the same or different networks. The DSDA functionality may also allow the UE 106 to simultaneously receive voice calls or data traffic on either phone number. In certain embodiments the voice call may be a packet switched communication. In other words, the voice call may be received using voice over LTE (VoLTE) technology and/or voice over NR (VoNR) technology. In some embodiments, the UE 106 may support Dual SIM Dual Standby (DSDS) functionality. The DSDS functionality may allow either of the two SIMs in the UE 106 to be on standby waiting for a voice call and/or data connection. In DSDS, when a call/data is established on one SIM, the other SIM is no longer active. In some embodiments, DSDx functionality (either DSDA or DSDS functionality) may be implemented with a single SIM (e.g., a eUICC) that executes multiple SIM applications for different carriers and/or RATs.

As shown, the SOC 300 may include processor(s) 302, which may execute program instructions for the communication device 106 and display circuitry 304, which may perform graphics processing and provide display signals to the display 360. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, short to medium range wireless communication circuitry 329, cellular communication circuitry 330, connector I/F 320, and/or display 360. The MMU 340 may be configured to perform memory protection and page table translation or set up. In some embodiments, the MMU 340 may be included as a portion of the processor(s) 302.

As noted above, the communication device 106 may be configured to communicate using wireless and/or wired communication circuitry. The communication device 106 may be configured to perform any of the various methods as further described herein.

As described herein, the communication device 106 may include hardware and software components for implementing the features described herein for a communication device 106 to communicate slice related information to the network. The processor 302 of the communication device 106 may be configured to implement part or all of the features described herein, e.g., by executing program instructions stored on a memory medium (e.g., a non-transitory computer-readable memory medium). Alternatively (or in addition), processor 302 may be configured as a programmable hardware element, such as an FPGA (Field Programmable Gate Array), or as an ASIC (Application Specific Integrated Circuit). Alternatively (or in addition) the processor 302 of the communication device 106, in conjunction with one or more of the other components 300, 304, 306, 310, 320, 329, 330, 340, 345, 350, 360 may be configured to implement part or all of the features described herein.

In addition, as described herein, processor 302 may include one or more processing elements. Thus, processor 302 may include one or more integrated circuits (ICs) that are configured to perform the functions of processor 302. In addition, each integrated circuit may include circuitry (e.g., first circuitry, second circuitry, etc.) configured to perform the functions of processor(s) 302.

Further, as described herein, cellular communication circuitry 330 and short to medium range wireless communication circuitry 329 may each include one or more processing elements. In other words, one or more processing elements may be included in cellular communication circuitry 330 and, similarly, one or more processing elements may be included in short to medium range wireless communication circuitry 329. Thus, cellular communication circuitry 330 may include one or more integrated circuits (ICs) that are configured to perform the functions of cellular communication circuitry 330. In addition, each integrated circuit may include circuitry (e.g., first circuitry, second circuitry, etc.) configured to perform the functions of cellular communication circuitry 330. Similarly, the short to medium range wireless communication circuitry 329 may include one or more ICs that are configured to perform the functions of short to medium range wireless communication circuitry 329. In addition, each integrated circuit may include circuitry (e.g., first circuitry, second circuitry, etc.) configured to perform the functions of short to medium range wireless communication circuitry 329.

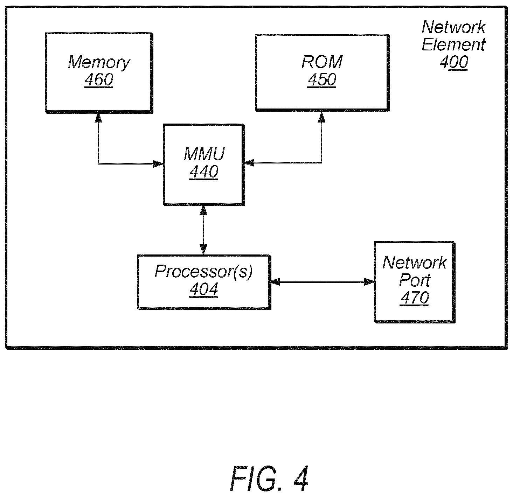

### Figure 4 - Example Block Diagram of a Network Element

Figure 4 illustrates an exemplary block diagram of a network element 400, according to some embodiments. According to some embodiments, the network element 400 may implement one or more logical functions/entities of a cellular core network, such as a mobility management entity (MME), serving gateway (S-GW), etc. As another possibility, the network element 400 may implement a network slice selection function (NSSF) entity. It is noted that the network element 400 of Figure 4 is merely one example of a possible network element 400. As shown, the core network element 400 may include processor(s) 404 which may execute program instructions for the core network element 400. The processor(s) 404 may also be coupled to memory management unit (MMU) 440, which may be configured to receive addresses from the processor(s) 404 and translate those addresses to locations in memory (e.g., memory 460 and read only memory (ROM) 450) or to other circuits or devices.

The network element 400 may include at least one network port 470. The network port 470 may be configured to couple to one or more base stations and/or other cellular network entities and/or devices. The network element 400 may communicate with base stations (e.g., eNBs) and/or other network entities / devices by means of any of various communication protocols and/or interfaces.

As described further subsequently herein, the network element 400 may include hardware and software components for implementing and/or supporting implementation of features described herein. The processor(s) 404 of the core network element 400 may be configured to implement or support implementation of part or all of the methods described herein, e.g., by executing program instructions stored on a memory medium (e.g., a non-transitory computer-readable memory medium). Alternatively, the processor 404 may be configured as a programmable hardware element, such as an FPGA (Field Programmable Gate Array), or as an ASIC (Application Specific Integrated Circuit), or a combination thereof.

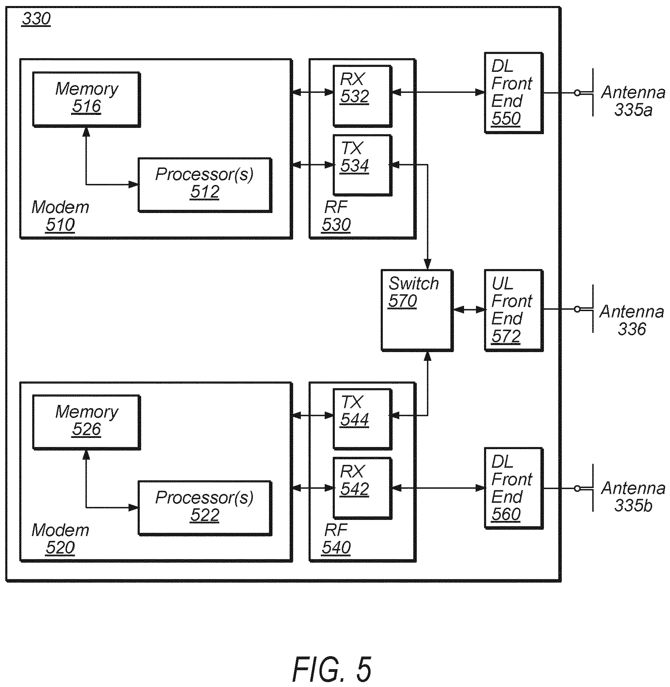

### Figure 5: Block Diagram of Cellular Communication Circuitry

Figure 5 illustrates an example simplified block diagram of cellular communication circuitry, according to some embodiments. It is noted that the block diagram of the cellular communication circuitry of Figure 5 is only one example of a possible cellular communication circuit. According to embodiments, cellular communication circuitry 330 may be included in a communication device, such as communication device 106 described above. As noted above, communication device 106 may be a user equipment (UE) device, a mobile device or mobile station, a wireless device or wireless station, a desktop computer or computing device, a mobile computing device (e.g., a laptop, notebook, or portable computing device), a tablet and/or a combination of devices, among other devices.

The cellular communication circuitry 330 may couple (e.g., communicatively; directly or indirectly) to one or more antennas, such as antennas 335a-b and 336 as shown (in Figure 3). In some embodiments, cellular communication circuitry 330 may include dedicated receive chains (including and/or coupled to, e.g., communicatively; directly or indirectly. dedicated processors and/or radios) for multiple RATs (e.g., a first receive chain for LTE and a second receive chain for 5G NR). For example, as shown in Figure 5, cellular communication circuitry 330 may include a modem 510 and a modem 520. Modem 510 may be configured for communications according to a first RAT, e.g., such as LTE or LTE-A, and modem 520 may be configured for communications according to a second RAT, e.g., such as 5G NR.

As shown, modem 510 may include one or more processors 512 and a memory 516 in communication with processors 512. Modem 510 may be in communication with a radio frequency (RF) front end 530. RF front end 530 may include circuitry for transmitting and receiving radio signals. For example, RF front end 530 may include receive circuitry (RX) 532 and transmit circuitry (TX) 534. In some embodiments, receive circuitry 532 may be in communication with downlink (DL) front end 550, which may include circuitry for receiving radio signals via antenna 335a.

Similarly, modem 520 may include one or more processors 522 and a memory 526 in communication with processors 522. Modem 520 may be in communication with an RF front end 540. RF front end 540 may include circuitry for transmitting and receiving radio signals. For example, RF front end 540 may include receive circuitry 542 and transmit circuitry 544. In some embodiments, receive circuitry 542 may be in communication with DL front end 560, which may include circuitry for receiving radio signals via antenna 335b.

In some embodiments, a switch 570 may couple transmit circuitry 534 to uplink (UL) front end 572. In addition, switch 570 may couple transmit circuitry 544 to UL front end 572. UL front end 572 may include circuitry for transmitting radio signals via antenna 336. Thus, when cellular communication circuitry 330 receives instructions to transmit according to the first RAT (e.g., as supported via modem 510), switch 570 may be switched to a first state that allows modem 510 to transmit signals according to the first RAT (e.g., via a transmit chain that includes transmit circuitry 534 and UL front end 572). Similarly, when cellular communication circuitry 330 receives instructions to transmit according to the second RAT (e.g., as supported via modem 520), switch 570 may be switched to a second state that allows modem 520 to transmit signals according to the second RAT (e.g., via a transmit chain that includes transmit circuitry 544 and UL front end 572).

In some embodiments, the cellular communication circuitry 330 may be configured to perform methods a network to notify user equipment device (UE) whether a network slice the UE has requested is subject to a quota as further described herein.

As described herein, the modem 510 may include hardware and software components for implementing any of the various other techniques described herein. The processors 512 may be configured to implement part or all of the features described herein, e.g., by executing program instructions stored on a memory medium (e.g., a non-transitory computer-readable memory medium). Alternatively (or in addition), processor 512 may be configured as a programmable hardware element, such as an FPGA (Field Programmable Gate Array), or as an ASIC (Application Specific Integrated Circuit). Alternatively (or in addition) the processor 512, in conjunction with one or more of the other components 530, 532, 534, 550, 570, 572, 335 and 336 may be configured to implement part or all of the features described herein.

In addition, as described herein, processors 512 may include one or more processing elements. Thus, processors 512 may include one or more integrated circuits (ICs) that are configured to perform the functions of processors 512. In addition, each integrated circuit may include circuitry (e.g., first circuitry, second circuitry, etc.) configured to perform the functions of processors 512.

As described herein, the modem 520 may include hardware and software components for implementing any of the various other techniques described herein. The processors 522 may be configured to implement part or all of the features described herein, e.g., by executing program instructions stored on a memory medium (e.g., a non-transitory computer-readable memory medium). Alternatively (or in addition), processor 522 may be configured as a programmable hardware element, such as an FPGA (Field Programmable Gate Array), or as an ASIC (Application Specific Integrated Circuit). Alternatively (or in addition) the processor 522, in conjunction with one or more of the other components 540, 542, 544, 550, 570, 572, 335 and 336 may be configured to implement part or all of the features described herein.

In addition, as described herein, processors 522 may include one or more processing elements. Thus, processors 522 may include one or more integrated circuits (ICs) that are configured to perform the functions of processors 522. In addition, each integrated circuit may include circuitry (e.g., first circuitry, second circuitry, etc.) configured to perform the functions of processors 522.

### 5G NR Architecture with LTE

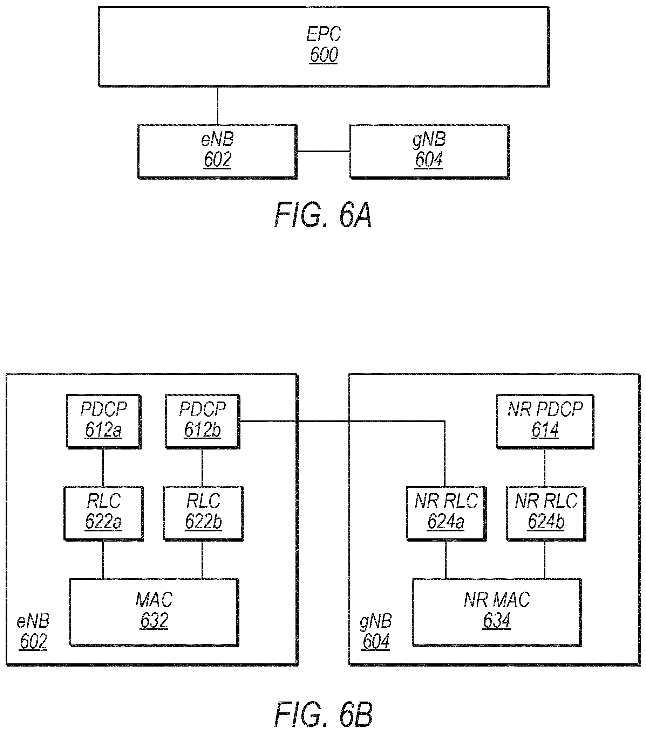

In some implementations, fifth generation (5G) wireless communication will initially be deployed concurrently with current wireless communication standards (e.g., LTE). For example, dual connectivity between LTE and 5G new radio (5G NR or NR) has been specified as part of the initial deployment of NR. Thus, as illustrated in Figures 6A-B, evolved packet core (EPC) network 600 may continue to communicate with current LTE base stations (e.g., eNB 602). In addition, eNB 602 may be in communication with a 5G NR base station (e.g., gNB 604) and may pass data between the EPC network 600 and gNB 604. Thus, EPC network 600 may be used (or reused) and gNB 604 may serve as extra capacity for UEs, e.g., for providing increased downlink throughput to UEs. In other words, LTE may be used for control plane signaling and NR may be used for user plane signaling. Thus, LTE may be used to establish connections to the network and NR may be used for data services.

Figure 6B illustrates a proposed protocol stack for eNB 602 and gNB 604. As shown, eNB 602 may include a medium access control (MAC) layer 632 that interfaces with radio link control (RLC) layers 622a-b. RLC layer 622a may also interface with packet data convergence protocol (PDCP) layer 612a and RLC layer 622b may interface with PDCP layer 612b. Similar to dual connectivity as specified in LTE-Advanced Release 12, PDCP layer 612a may interface via a master cell group (MCG) bearer with EPC network 600 whereas PDCP layer 612b may interface via a split bearer with EPC network 600.

Additionally, as shown, gNB 604 may include a MAC layer 634 that interfaces with RLC layers 624a-b. RLC layer 624a may interface with PDCP layer 612b of eNB 602 via an X₂ interface for information exchange and/or coordination (e.g., scheduling of a UE) between eNB 602 and gNB 604. In addition, RLC layer 624b may interface with PDCP layer 614. Similar to dual connectivity as specified in LTE-Advanced Release 12, PDCP layer 614 may interface with EPC network 600 via a secondary cell group (SCG) bearer. Thus, eNB 602 may be considered a master node (MeNB) while gNB 604 may be considered a secondary node (SgNB). In some scenarios, a UE may operate to maintain a connection to both an MeNB and a SgNB. In such scenarios, the MeNB may be used to maintain a radio resource control (RRC) connection to an EPC while the SgNB may be used for capacity (e.g., additional downlink and/or uplink throughput).

### Network Slicing

Network slicing techniques are currently actively under development and may figure prominently in fifth generation ("5G") cellular communication technologies. Network slicing is a concept introduced in 5G that may enable a cellular network operator to create customized networks to provide solutions for different market scenarios that have diverse requirements, e.g., in the areas of functionality, performance and isolation. For example, a cellular network may provide multiple network slices, where each network slice may include a set of network functions (NFs) selected to provide some specific telecommunication service(s) and network capabilities, and the resources to run these NFs. For example, global and regional organizations such as next generation mobile networks (NGMN), third generation partnership project (3GPP), 5G public private partnership (5GPPP), 4G Americas, 5G Forum, International Mobile Telecommunications 2020 (IMT-2020), etc., have documented possible use cases and requirements regarding network slicing.

Among the possible network slicing solutions, Radio Access Network (RAN) slicing and Core Network (CN) slicing are both possible and are currently under study by 3GPP RAN working groups (WGs) and 3GPP service and system aspects (SA) WGs separately. Network slicing is currently specified in 3GPP TS 23.501 sec 5.15 and 3GPP TS 24.501 sec 4.6. When employing network slicing, the operator can deploy network slices that differ for supported features, or provide exactly the same features, but for different groups of UEs.

The following discussion applies generally to any wireless communication system employing a first cellular network that does not support network slicing, and a second cellular network that does support network slicing. For the sake of convenience, the discussion below refers to the first cellular network that does not support network slicing as a 4G Network and refers to the second cellular network that does support network slicing as a 5G Network. However, the methods described below may be used in any types or any of various generations of networks.

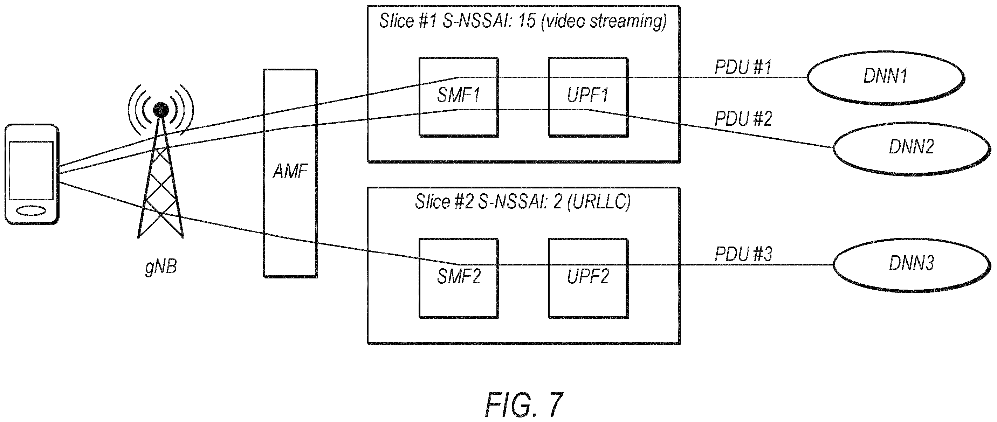

Figure 7 illustrates an example system where a UE is in communication with a cellular network system that implements network slicing (e.g., a 5G Network). As shown, the UE communicates in a wireless manner to a cellular base station. The base station is in turn coupled to the cellular network. As shown, the cellular network may comprise a core access and mobility management function (AMF). The AMF may be coupled to different session management functions (SMF) and user plane functions. As shown, session management function 1 (SMF1) and user plane function 1 (UPF1) may form a first slice (Slice 1) and may have a corresponding first S-NSSAI (single network slice selection assistance information), also referred to as a "Slice ID". In this example, Slice 1 is specified to perform video streaming. Session management function 2 (SMF2) and user plane function 2 (UPF2) may form a second slice (Slice 2) and may have a corresponding second S-NSSAI. In this example, Slice 2 is specified to perform ultra-reliable low-latency communication (URLLC).

As shown in Figure 7, a single UE can be served by more than one Network Slice simultaneously (e.g., Slice 1 and Slice 2 in Figure 7). In this example, the AMF serving the UE in this case is common to all Network Slices. Figure 7 also illustrates that multiple PDU sessions can share the same slice.

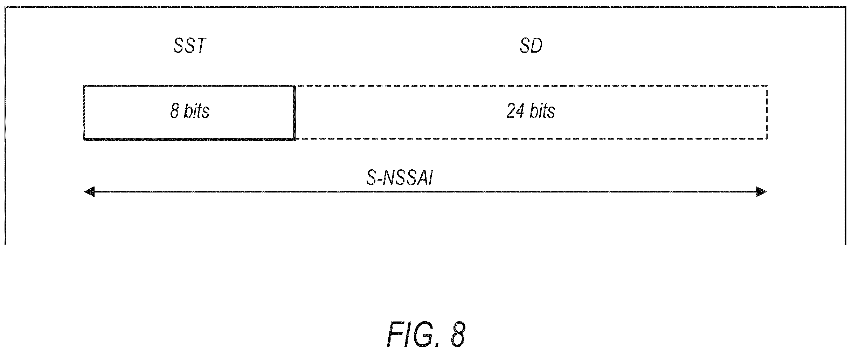

As shown in Figure 8, a network slice may be identified by an S-NSSAI, which is comprised of a slice/service type (SST) and a slice differentiator (SD). Inclusion of an SD in an S-NSSAI is optional. A set of one or more S-NSSAIs is called the NSSAI.

Network Slicing and UE Route Selection Policy (URSP) are not supported in 4G networks. However, during PDN connection establishment in a 4G network, the network may assign an S-NSSAI associated with the 4G PDN connection. The assignment of the S-NSSAI may be based on a combination of session management function (SMF), the packet data network gateway control plane function (PGW-C) address and Access Point Name (APN). The Access Point Name (APN) is essentially a type of gateway or anchoring point to which the UE is attached to gain access to the core network for at least a portion of its data service. The network may then send the assigned S-NSSAI to the UE in an information element (IE). For example, the assigned S-NSSAI may be sent in the Protocol Configuration Options (PCO) information element (IE) or Extended PCO IE in the Activate Default EPS Bearer Context Request message.

This S-NSSAI is not currently used when the UE is operating in a 4G network. However, when the UE moves from a 4G network to a 5G network, the UE may include the one or more S-NSSAIs received from the 4G network as the requested NSSAI in its Registration Request message. The UE may also set the S-NSSAI of the corresponding PDU session to the value previously received in the PCO IE as mentioned above. If the SMF+PGW-C supports more than one S-NSSAI and the APN is valid for more than one S-NSSAI, the SMF+PGW-C should only select an S-NSSAI that is mapped to the subscribed S-NSSAIs of the UE.

A problem can arise where the S-NSSAI(s) provided by the network internal logic may not be adequate for the network to correctly select the appropriate S-NSSAI for use by the UE after the UE transitions to a 5G network. In this case, the network may not select the correct S-NSSAI for use by the UE. As a consequence, after the UE Inter Rat (IRAT) transfer from a 4G network to a 5G network, if the PDU session of the 5G network is not linked to the correct S-NSSAI (e.g., if the PDU session is linked to the default slice instead of to the dedicated slice), the PDU session will be negatively impacted by this incorrect link. This negative impact will persist until the release of the PDU session. This may degrade (or negatively impact) the end user experience.

Currently the network may use the APN to determine the S-NSSAI to be used when the UE transitions from a 4G network to a 5G network. However, use of the APN may not be sufficient to allow the network to properly determine the correct S-NSSAI. Therefore, improvements in the field are desired.

In some embodiments, while camped on a 4G network, the UE may be configured to provide the 4G network with slice related information, thereby assisting the 4G network in providing the correct slice ID information to the UE while camped on the 4G network. More specifically, with this improved slice related information from the UE, the 4G network may then be able to include the correct S-NSSAI in in the Protocol configuration options IE or Extended protocol configuration options IE in the ACTIVATE DEFAULT EPS BEARER CONTEXT REQUEST message that is sent to the UE. In other words, this may enable the 4G network to provide the UE with the correct slice ID information (the correct S-NSSAIs) while camping on the 4G network.

Thus, when the UE transitions from the 4G network to a 5G network, this may enable the UE and the network to be able to link the 5G PDU sessions to the appropriate (or "correct") slices. Here it is noted that the PDU session may be linked to the correct slice in both the UE and the 5G Network without any signaling between the UE and the 5G Network. Instead, both the UE and the 5G Network depend on and utilize the S-NSSAI previously agreed upon while the UE was camping on the 4G Network. This enables the 5G network to link the 5G PDU session to the correct S-NSSAI, thereby providing an improved user experience on the 5G network. The terms "appropriate slice" or "correct slice" refers to a slice that most appropriately serves the type of application that is currently executing on the UE and is the subject of the current 5G PDU session.

Therefore, embodiments may relate to a UE that is configured to provide the 4G network with more slice related information to help the 4G network to include the right S-NSSAI in in the Protocol configuration options IE or Extended protocol configuration options IE in the ACTIVATE DEFAULT EPS BEARER CONTEXT REQUEST message. The UE may be configured to provide various types of slice related information (information related to the S-NSSAI) to the base station while camped on a 4G network.

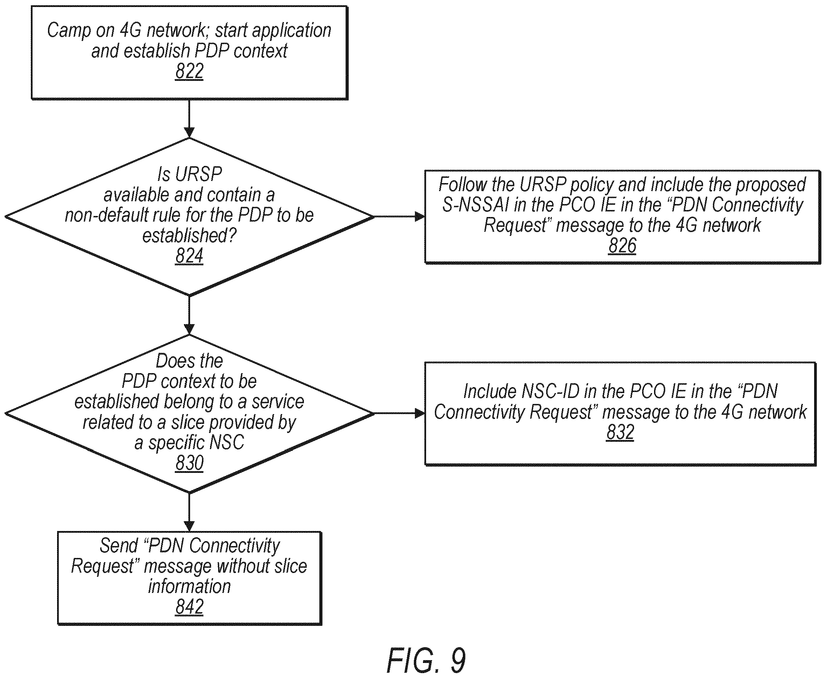

### Figure 9 - Flowchart Diagram: UE Provides Slice Related Information to the 4G Network

Figure 9 illustrates one embodiment of a method for a UE to provide improved slice related information to a 4G network, thereby allowing the 4G network to then provide the correct slice ID information (the correct S-NSSAI) back to the UE. As described above, this correct S-NSSAI may be used later after transition to a 5G network for improved operation.

As shown, at 822 the UE is camped on a 4G network and begins executing an application. Example applications include those that receive and present streaming video, perform various communication functions, etc. The UE may then establish a PDP (Packet Data Protocol) context. The PDP context is defined between the UE and the GGSN (Gateway GPRS Support Node) and defines information used for the connection.

At 824, the UE determines if a URSP (UE Route Selection Policy) is available and whether the URSP contains a non-default rule (a rule other than the default rule) for the PDP to be established. If so, then operation proceeds to 826 where the UE follows the URSP policy and includes the designated S-NSSAI (the S-NSSAI indicated by the non-default rule of the URSP) in the PCO IE in a PDN Connectivity Request message to the 4G network.

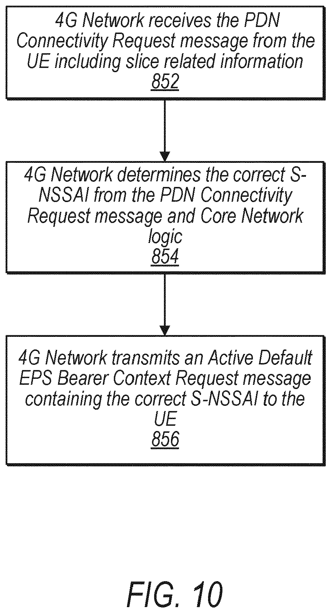

Therefore, in this embodiment, while camping on a 4G network, if the UE has a URSP (UE Route Selection Policy), which may have been stored from previous camping on a 5G network, the UE follows the URSP to determine the S-NSSAI corresponding to the PDP context to be established. If the URSP contains a non-default rule for the PDP context to be established (a rule other than the default rule) as determined in 824, then the UE may include the S-NSSAI specified by the URSP in the Protocol configuration options IE or Extended protocol configuration options IE in the PDN Connectivity Request message in 826. This operates to provide the correct slice ID information to the 4G network. In this manner, the UE will later receive the "correct" S-NSSAI from the 4G network, as discussed below with respect to Figure 10.

While camping on 4G, if the UE has no URSP or if the UE has a URSP but there is no rule other than default rule (i.e., there is only the default rule) in the stored URSP for the PDP context to be established as determined in 824, then operation proceeds to 830.

In 830 the UE determines if the PDP context to be established belongs to a service related to a slice provided by a specific NSC (Network Slice Customer). The term "Network Slice Customer" refers to a Communication Service Provider (CSP) or Communication Service Customer (CSC) who uses a network slice as a service. If so, then in 832 the UE includes the NSC-ID in the Protocol Configuration Options (PCO) information element (IE) in the PDN Connectivity Request message sent by the UE to the 4G network. This operates to provide improved slice ID information to the 4G network. In this manner, the UE will later receive the "correct" S-NSSAI from the 4G network, as discussed below with respect to Figure 10. Alternatively, or in addition, in 832 the UE may include any of various types of slice related information which can be used by the 4G Network to provide the correct S-NSSAI.

Therefore, in the case specified by steps 830 and 832, the UE may include additional information in the Protocol configuration options IE or Extended protocol configuration options IE in the PDN Connectivity Request message to help the network to determine the correct S-NSSAI. For example, in the case when the network slice is provided as a service, the UE may include the ID of the NSC who provided the slice. In other words, when the PDP context to be established belongs to a service related to a slice provided by a specific NSC, in this case the UE may inform the network about the NSC-ID in the Protocol configuration options IE or Extended protocol configuration options IE in the PDN Connectivity Request message. The 4G network can then use this received NSC-ID to provide the correct S-NSSAI to the UE as discussed below.

### Figure 10 - Flowchart Diagram: 4G Network Receives Slice Related Information and Provides Back Correct S-NSSAI

Figure 10 is a flowchart diagram illustrating operation of the 4G Network after the operations in Figure 9 have been performed. In other words, the operation of Figure 10 presumes that the UE has provided a PDN Connectivity Request message containing slice related information to the 4G Network as described above in steps 826 and/or 832.

As shown, at 852 the 4G Network receives, from the UE, a PDN Connectivity Request containing slice related information. The slice related information may be contained in a Protocol Configuration Options (PCO) information element (IE). The PDN Connectivity Request received in 852 may be one of the PDN Connectivity Requests transmitted by the UE in either 826 or 832 of Figure 9. The slice related information contained in the PDN Connectivity Request may be a proposed S-NSSAI as described above in 826 or may be an NSC-ID as described above in 832.

In 854 the 4G Network determines the correct S-NSSAI at least in part based on the slice related information contained in the PDN Connectivity Request message and/or 4G Core Network internal logic. For example, where the slice related information is a proposed S-NSSAI (per 826 of Figure 9), the 4G Network may use this proposed S-NSSAI as the correct S-NSSAI. Alternatively, the 4G Network (the Core Network internal logic of the 4G Network) may determine that the proposed S-NSSAI sent by the UE in 826 is not correct, e.g., is stale or old. Here the 4G Network may have a more updated S-NSSAI that it believes should be used. As another example, where the slice related information is an NSC-ID in 832, the 4G Network may determine the correct S-NSSAI based at least in part on this NSC-ID.

In 856 the 4G Network may transmit an Activate Default EPS Bearer Context Request message containing the correct S-NSSAI (as determined in 854) to the UE. Thus, the UE provision of slice related information in one or more of 826 and 832 of Figure 9 may be used by the 4G Network to assist in the 4G Network determining and providing the correct (or a more correct) slice ID (S_NSSAI) to the UE.

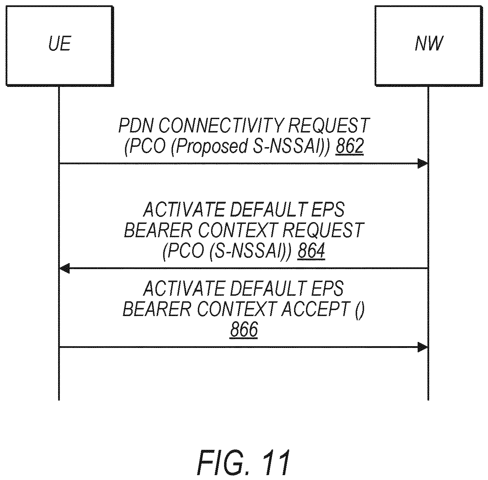

### Figure 11 - High Level Flow Diagram

Figure 11 is a flow diagram which illustrates operation of Figures 9 and 10 at a higher level.

As shown, at 862 the UE transmits a PDN Connectivity Request to the 4G Network. This PDN Connectivity Request may include slice related information, such as a proposed S-NSSAI as described in 826 of Figure 9, or an NSC-ID as described in 832 of Figure 9.

In response to the PDN Connectivity Request received by the 4G Network in 862 (e.g., in 826 or 832), at 864 the 4G Network may provide an Activate Default EPS Bearer Context Request message to the UE containing the correct NSSAI. Here 864 may encompass the operations performed in 854 and 856 of Figure 10. The UE receives and stores the correct Slice ID (the correct NSSAI) in 864. In 866 the UE transmits an Activate Default EPS Bearer Context Accept () message back to the 4G Network accepting the message received in 864.

In 866 the UE transmits an Activate Default EPS Bearer Context Accept message back to the 4G Network to complete the operation.

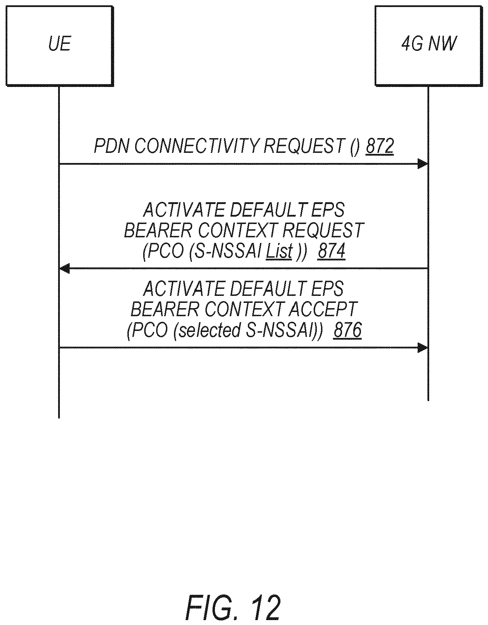

### Figure 12 - Second Embodiment: 4G Network Provides a List of Possible Slice IDs

Figure 12 illustrates an alternate non-claimed embodiment of a method whereby, instead of the UE providing slice related information to the 4G Network, the 4G Network may provide a list of (or a data structure containing) a subset or all of the valid Slice ID choices (valid S-NSSAIs) to the UE for consideration.

As sown, at 872 the UE provides a PDN Connectivity Request that is received by the 4G Network. In contrast to 862 of Figure 11, the PDN Connectivity Request does not include a proposed S-NSSAI.

At 874 the 4G Network transmits an Activate Default EPS Bearer Context Request message to the UE. This Activate Default EPS Bearer Context Request message may include a list of possible S-NSSAIs (a list of possible or valid Slice IDs). The UE receives this Activate Default EPS Bearer Context Request message, including the list of possible Slice IDs (the list of possible and/or valid S-NSSAIs) in 874.

In 876 the UE selects the most appropriate (or "correct") S-NSSAI from the list of possible S-NSSAIs received in 874. In 876 the UE then transmits the selected (the correct) S-NSSAI to the 4G Network in an Activate Default EPS Bearer Context Accept message. The correct S-NSSAI may be included in the PCO field of the Activate Default EPS Bearer Context Accept message.

Thus, in the embodiment of Figure 12 when the UE initiates the PDN connectivity procedure, where multiple S-NSSAIs can be selected (to be linked to the corresponding PDU session) and the 4G Network does not have sufficient information to select the correct S-NSSAI, the 4G Network may provide or offer a subset or all of the valid S-NSSAI choices to the UE (874). The UE may then select the correct S-NSSAI from this list of S-NSSAIs provided by the 4G Network. The UE may either return the selected S-NSSAI to the 4G Core Network, specifically to the SMF+PGW-C logic in the 4G Network via PCO (as shown in 876 of Figure 12).

In some embodiments, when the UE moves from the 4G Network to the 5G Network, the UE may include the S-NSSAI received in the 4G Network in the configured NSSAI list which the UE used to create the requested NSSAI to inform the 5G Network regarding the network slices which the UE desires to later use.

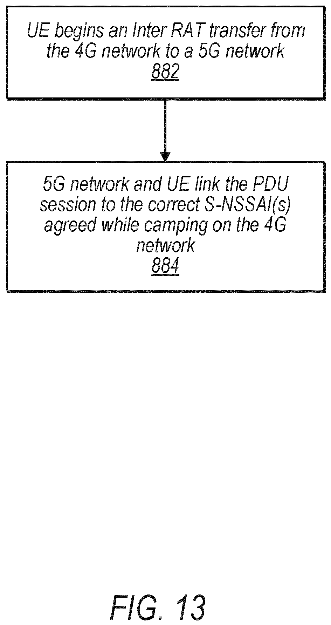

### Figure 13 - UE transitions to a 5G Network

Figure 13 illustrates operation when the UE transitions from the 4G network to a 5G network (from a first cellular network to a second cellular network).

As shown, at 882 the UE begins an Inter RAT (Radio Access Technology) transfer from the 4G Network to the 5G Network. At 884 the 5G Network and the UE link the PDU session being established to the correct S-NSSAI(s) that was agreed upon while the UE was camping on the 4G Network. Here it is noted that the 5G Network has access to information contained in the 4G Network, and the 5G Network can use this access to determine the correct S-NSSAI(s) that was previously provided by the UE to the 4G Network, or which was determined by the 4G Network based at least in part on information that was provided to the 4G Network by the UE (e.g., in 826 or 832).

Once the correct S-NSSAI(s) is determined by the 5G Network and the UE, as noted above both the UE and the 5G Network link the correct S-NSSAI(s) to the current PDU session between the UE and the 5G Network. This allows the correct network slice(s) in the 5G Network to be used in servicing the particular application needs of the UE, thus providing an improved user experience relative to prior art operation.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Any of the methods described herein for operating a user equipment (UE) may be the basis of a corresponding method for operating a base station, by interpreting each message/signal X received by the UE in the downlink as message/signal X transmitted by the base station, and each message/signal Y transmitted in the uplink by the UE as a message/signal Y received by the base station.

A wireless device (e.g., a UE 106) may comprise wireless communication circuitry and at least one processor coupled to the wireless communication circuitry. Additionally, the at least one processor may be configured to cause the wireless device to transmit a packet data network (PDN) connectivity request to a first cellular network, wherein the first cellular network does not support network slicing. Additionally or alternatively, the at least one processor may be configured to cause the wireless device to receive a message from the first cellular network, wherein the message may comprise a list of a plurality of possible single network slice selection assistance information sets (S-NSSAIs). The at least one processor may be configured to cause the wireless device to select a desired S-NSSAI from the list of the plurality of possible S-NSSAIs, wherein the selected S-NSSAI may be useable when the wireless device transitions from the first cellular network to a second cellular network, and wherein the second cellular network may support network slicing.

Additionally or alternatively, the message received from the first cellular network comprising the list of the plurality of possible S-NSSAIs may be an Activate Default EPS Bearer Context Request message, according to some embodiments. The at least one processor may be further configured to cause the wireless device to transmit the selected S-NSSAI to the first cellular network. Additionally or alternatively, the at least one processor may be further configured to cause the wireless device to transmit the selected S-NSSAI to the first cellular network in an Activate Default EPS Bearer Context Accept message.

The at least one processor may be further configured to cause the wireless device to transition from the first cellular network to the second cellular network, wherein the transition comprises creation of a packet data unit (PDU) session between the UE and the second cellular network. Additionally or alternatively, the at least one processor may be further configured to cause the wireless device to link the S-NSSAI received from the first cellular network with the PDU session between the UE and the second cellular network. The first cellular network may be a 4G network and the second cellular network may be a 5G network.

The at least one processor may be further configured to cause the wireless device to transmit a Radio Resource Control (RRC) connection establishment message to a second cellular network. Additionally or alternatively, the RRC connection establishment message may comprise the selected S-NSSAI for use by the second cellular network.

## Claims

1. A method, comprising:
by a user equipment, UE (106):
initiating an application on the UE (106), while
connected with a first cellular network (100), wherein the first cellular network (100) does not support network slicing;
determining slice related information for the application;
determining if a UE route selection policy, URSP, contains a non-default rule for a packet data protocol, PDP, context between the UE (106) and the first cellular network (100), wherein:
when the URSP contains a non-default rule for the PDP context between the UE (106) and the first cellular network (100), the method further comprises determining, according to the non-default rule of the URSP, a proposed single network slice selection assistance information, S-NSSAI, wherein the slice related information is the proposed S-NSSAI;
when the URSP does not contain a non-default rule for the PDP context between the UE (106) and the first cellular network (100), and when the PDP context is associated with a service related to a slice provided by a specific network slice customer, NSC, the method further comprises determining an identifier of the NSC, wherein the slice related information is the identifier of the NSC;
providing the slice related information to the first cellular network (100); and
receiving a S-NSSAI from the first cellular network, wherein the S-NSSAI was determined based at least in part on the slice related information provided by the UE (106) to the first cellular network (100);
wherein the S-NSSAI is useable when the UE (106) transitions to a second cellular network that does support network slicing.

2. The method of claim 1, further comprising: transitioning
from the first cellular network to a second cellular network, wherein the second cellular network supports network slicing, wherein the transition comprises creation of a packet data unit, PDU, session between the UE and the second cellular network; and
linking the S-NSSAI received from the first cellular network with the PDU session between the UE and the second cellular network.

3. The method of claim 1, wherein the slice related information provided by the UE to the first cellular network comprises the proposed S-NSSAI, and
wherein the S-NSSAI received from the first cellular network is the proposed S-NSSAI.

4. The method of claim 1, further comprising:
providing the slice related information to the first cellular network in a PDN Connectivity Request.

5. The method of claim 1, further comprising:
receiving the S-NSSAI from the first cellular network in an Activate Default EPS Bearer Context Request message from the first cellular network.

6. The method of claim 1, wherein the first cellular network is a 4G network, and wherein the second cellular network is a 5G network.

7. A method, comprising:
by a network device (400) configured for use in a first cellular network (100) which does not support network slicing:
receiving a packet data network, PDN, connectivity request message from a user equipment, UE (106), wherein the PDN connectivity request message includes slice related information associated with a packet data protocol, PDP, context between the UE (106) and the first cellular network (100);
determining a correct single network slice selection assistance information, S-NSSAI, for the PDP context based at least in part on at least one of the slice related information received in the PDN connectivity message and core logic in the first cellular network (100), wherein the correct S-NSSAI corresponds to a slice that most appropriately serves a type of application that is currently executing on the UE (106), and wherein:
when a UE route selection policy, URSP, contains a non-default rule for the PDP context between the UE (106) and the first cellular network (100), said determining of the correct S-NSSAI is performed according to the non-default rule of the URSP, wherein the slice related information is the correct S-NSSAI;
when the URSP does not contain a non-default rule for the PDP context between the UE (106) and the first cellular network (100), and when the PDP context is associated with a service related to a slice provided by a specific network slice customer, NSC, said determining of the correct S-NSSAI is performed according to an identifier of the NSC, wherein the slice related information is the identifier of the NSC;
transmitting the correct S-NSSAI to the UE.

8. The method of claim 7, wherein the correct S-NSSAI is useable for when the UE transitions to a second cellular network that does support network slicing.

9. The method of claim 8, wherein the first cellular network is a 4G network and wherein the second cellular network is a 5G network.

10. The method of claim 7, wherein the network device is configured to transmit the correct S-NSSAI in an Activate Default EPS Bearer Context Request message to the UE.

11. A non-transitory computer readable storage medium storing program instructions executable by at least one processor to cause a user equipment, UE, to perform the methods of any of claims 1-6.

12. An apparatus, comprising: at
least one processor configured to cause a user equipment, UE, to perform the method of any of claims 1-6.

13. The apparatus of claim 12, further comprising:
a radio operably coupled to the at least one processor.

14. An apparatus, comprising:
at least one processor configured to cause a network device configured for use in a first cellular network which does not support network slicing to perform the method of any of claims 7-10.

15. The apparatus of claim 14, further comprising:
one or more antennas; and
transceiver circuitry operably coupled to the at least one processor.

## Patentansprüche

1. Verfahren, umfassend:
durch ein Benutzergerät, UE (106):
Initiieren einer Anwendung auf dem UE (106), während es mit einem ersten zellularen Netzwerk (100) verbunden ist, wobei das erste zellulare Netzwerk (100) Netzwerk-Slicing nicht unterstützt;
Bestimmen von Slice-bezogener Information für die Anwendung;
Bestimmen, ob eine UE-Routenauswahlrichtlinie, URSP, eine Nicht-Standardregel für einen Paketdatenprotokoll-, PDP-, Kontext zwischen dem UE (106) und dem ersten zellularen Netzwerk (100) enthält, wobei:
wenn die URSP eine Nicht-Standardregel für den PDP-Kontext zwischen dem UE (106) und dem ersten zellularen Netzwerk (100) enthält, das Verfahren ferner das Bestimmen, gemäß der Nicht-Standardregel der URSP, einer vorgeschlagenen Einzelnetzwerk-Slice-Auswahlunterstützungsinformation, S-NSSAI, umfasst, wobei die Slice-bezogene Information die vorgeschlagene S-NSSAI ist;
wenn die URSP keine Nicht-Standardregel für den PDP-Kontext zwischen dem UE (106) und dem ersten zellularen Netzwerk (100) enthält, und wenn der PDP-Kontext mit einem Dienst assoziiert ist, der mit einem Slice in Beziehung steht, der von einem spezifischen Netzwerk-Slice-Kunden, NSC, bereitgestellt wird, das Verfahren ferner das Bestimmen einer Kennung des NSC umfasst, wobei die Slice-bezogene Information die Kennung des NSC ist;
Bereitstellen der Slice-bezogenen Information für das erste zellulare Netzwerk (100); und
Empfangen einer S-NSSAI von dem ersten zellularen Netzwerk, wobei die S-NSSAI zumindest teilweise basierend auf der Slice-bezogenen Information bestimmt wurde, die von dem UE (106) für das erste zellulare Netzwerk (100) bereitgestellt wird;
wobei die S-NSSAI verwendbar ist, wenn das UE (106) zu einem zweiten zellularen Netzwerk übergeht, das Netzwerk-Slicing unterstützt.

2. Verfahren nach Anspruch 1, ferner umfassend:
Übergehen von dem ersten zellularen Netzwerk zu einem zweiten zellularen Netzwerk, wobei das zweite zellulare Netzwerk Netzwerk-Slicing unterstützt, wobei das Übergehen Erzeugen einer Paketdateneinheit-, PDU-, Sitzung zwischen dem UE und dem zweiten zellularen Netzwerk umfasst; und
Verknüpfen der von dem ersten zellularen Netzwerk empfangenen S-NSSAI mit der PDU-Sitzung zwischen dem UE und dem zweiten zellularen Netzwerk.

3. Verfahren nach Anspruch 1, wobei die Slice-bezogene Information, die von dem UE für das erste zellulare Netzwerk bereitgestellt wird, die vorgeschlagene S-NSSAI umfasst, und
wobei die von dem ersten zellularen Netzwerk empfangene S-NSSAI die vorgeschlagene S-NSSAI ist.

4. Verfahren nach Anspruch 1, ferner umfassend: Bereitstellen der Slice-bezogenen Information für das erste zellulare Netzwerk in einer PDN-Konnektivitätsanforderung.

5. Verfahren nach Anspruch 1, ferner umfassend: Empfangen der S-NSSAI von dem ersten zellularen Netzwerk in einer Activate Default EPS Bearer Context Request-Nachricht von dem ersten zellularen Netzwerk.

6. Verfahren nach Anspruch 1, wobei das erste zellulare Netzwerk ein 4G-Netzwerk ist, und wobei das zweite zellulare Netzwerk ein 5G-Netzwerk ist.

7. Verfahren, umfassend:
durch eine Netzwerkvorrichtung (400), die zur Verwendung in einem ersten zellularen Netzwerk (100) konfiguriert ist, das Netzwerk-Slicing nicht unterstützt:
Empfangen einer Paketdatennetzwerk-, PDN-, Konnektivitätsanforderungsnachricht von einem Benutzergerät, UE (106), wobei die PDN-Konnektivitätsanforderungsnachricht Slice-bezogene Information enthält, die mit einem Paketdatenprotokoll-, PDP-, Kontext zwischen dem UE (106) und dem ersten zellularen Netzwerk (100) assoziiert ist;
Bestimmen einer korrekten Einzelnetzwerk-Slice-Auswahlunterstützungsinformation, S-NSSAI, für den PDP-Kontext zumindest teilweise basierend auf zumindest einer der Slice-bezogenen Information, die in der PDN-Konnektivitätsnachricht empfangen wird, und einer Kernlogik in dem ersten zellularen Netzwerk (100), wobei die korrekte S-NSSAI einem Slice entspricht, der einen Anwendungstyp, der derzeit auf dem UE (106) ausgeführt wird, am geeignetsten bedient, und wobei:
wenn eine UE-Routenauswahlrichtlinie, URSP, eine Nicht-Standardregel für den PDP-Kontext zwischen dem UE (106) und dem ersten zellularen Netzwerk (100) enthält, das Bestimmen der korrekten S-NSSAI gemäß der Nicht-Standardregel der URSP durchgeführt wird, wobei die Slice-bezogene Information die korrekte S-NSSAI ist;
wenn die URSP keine Nicht-Standardregel für den PDP-Kontext zwischen dem UE (106) und dem ersten zellularen Netzwerk (100) enthält, und wenn der PDP-Kontext mit einem Dienst assoziiert ist, der mit einem Slice in Beziehung steht, der von einem spezifischen Netzwerk-Slice-Kunden, NSC, bereitgestellt wird, das Bestimmen der korrekten S-NSSAI gemäß einer Kennung des NSC durchgeführt wird, wobei die Slice-bezogene Information die Kennung des NSC ist;
Übertragen der korrekten S-NSSAI an das UE.

8. Verfahren nach Anspruch 7, wobei die korrekte S-NSSAI verwendbar ist, wenn das UE zu einem zweiten zellularen Netzwerk übergeht, das Netzwerk-Slicing unterstützt.

9. Verfahren nach Anspruch 8, wobei das erste zellulare Netzwerk ein 4G-Netzwerk ist, und wobei das zweite zellulare Netzwerk ein 5G-Netzwerk ist.

10. Verfahren nach Anspruch 7, wobei die Netzwerkvorrichtung konfiguriert ist, um die korrekte S-NSSAI in einer Activate Default EPS Bearer Context Request-Nachricht an das UE zu übertragen.

11. Nichtflüchtiges computerlesbares Speichermedium, das Programmanweisungen speichert, die von mindestens einem Prozessor ausführbar sind, um ein Benutzergerät, UE, zu veranlassen, die Verfahren nach einem der Ansprüche 1-6 durchzuführen.

12. Vorrichtung, umfassend:
mindestens einen Prozessor, der konfiguriert ist, um ein Benutzergerät, UE, zu veranlassen, das Verfahren nach einem der Ansprüche 1-6 durchzuführen.

13. Vorrichtung nach Anspruch 12, ferner umfassend:
ein Funkgerät, das betriebsfähig mit dem mindestens einen Prozessor gekoppelt ist.

14. Vorrichtung, umfassend:
mindestens einen Prozessor, der konfiguriert ist, um eine Netzwerkvorrichtung, die zur Verwendung in einem ersten zellularen Netzwerk konfiguriert ist, das Netzwerk-Slicing nicht unterstützt, zu veranlassen, das Verfahren nach einem der Ansprüche 7-10 durchzuführen.

15. Vorrichtung nach Anspruch 14, ferner umfassend:
eine oder mehrere Antennen; und
eine Sendeempfängerschaltung, die betriebsfähig mit dem mindestens einen Prozessor gekoppelt ist.

## Revendications

1. Un procédé comprenant :
par un équipement utilisateur, UE (106) :
le lancement d'une application sur l'UE (106), pendant qu'il est connecté à un premier réseau cellulaire (100), le premier réseau cellulaire (100) ne supportant pas le slicing de réseau ;
la détermination d'une information relative à une slice pour l'application ;
la détermination si une politique de sélection de route d'UE, URSP, contient une règle qui n'est pas par défaut pour un contexte de protocole de données en paquets, PDP, entre l'UE (106) et le premier réseau cellulaire (100), où :
lorsque la URSP contient une règle qui n'est pas par défaut pour le contexte de PDP entre l'UE (106) et le premier réseau cellulaire (100), le procédé comprend en outre la détermination, en fonction de la règle qui n'est pas par défaut de la URSP, d'une information d'assistance de sélection de slice de réseau unique, S-NSSAI, l'information relative à la slice étant la S-NSSAI proposée ;
lorsque la URSP ne contient pas de règle qui n'est pas par défaut pour le contexte de PDP entre l'UE (106) et le premier réseau cellulaire (100), et lorsque le contexte de PDP est associé à un service relatif à une slice fournie par un client de slice de réseau spécifique, NSC, le procédé comprend en outre la détermination d'un identifiant du NSC,
l'information relative à la slice étant
l'identifiant du NSC ;
la délivrance au premier réseau cellulaire (100) de l'information relative à la slice ; et
la réception d'une S-NSSAI en provenance du premier réseau cellulaire, la S-NSSAI ayant été déterminée au moins en partie sur la base de l'information relative à la slice délivrée par l'UE (106) au premier réseau cellulaire (100) ;
dans lequel la S-NSSAI est utilisable lorsque l'UE (106) opère une transition vers un second réseau cellulaire qui ne supporte pas le slicing de réseau.

2. Le procédé de la revendication 1, comprenant en outre :
la transition du premier réseau cellulaire vers un second réseau cellulaire, le second réseau cellulaire supportant le slicing de réseau, la transition comprenant la création d'une session d'unité de données en paquets, PDU, entre l'UE et le second réseau cellulaire ; et
le rattachement de la S-NSSAI reçue en provenance du premier réseau cellulaire avec la session de PDU entre l'UE et le second réseau cellulaire.

3. Le procédé de la revendication 1, dans lequel l'information relative à la slice délivrée au premier réseau cellulaire par l'UE comprend la S-NSSAI proposée, et
dans lequel la S-NSSAI reçue en provenance du premier réseau cellulaire est la S-NSSAI proposée.

4. Le procédé de la revendication 1, comprenant en outre :
la délivrance au premier réseau cellulaire de l'information relative à la slice dans une requête de connectivité de PDN.

5. Le procédé de la revendication 1, comprenant en outre :
la réception de la S-NSSAI en provenance du premier réseau cellulaire dans un message de requête d'activation de contexte de bearer EPS par défaut en provenance du premier réseau cellulaire.

6. Le procédé de la revendication 1, dans lequel le premier réseau cellulaire est un réseau 4G et dans lequel le second réseau cellulaire est un réseau 5G.

7. Un procédé, comprenant :
par un dispositif de réseau (400) configuré pour une utilisation dans un premier réseau cellulaire (100) qui ne supporte pas le slicing de réseau :
la réception d'un message de requête de connectivité de réseau de données par paquets, PDN, en provenance d'un équipement utilisateur, UE (106), le message de requête de connectivité de PDN comprenant une information relative à une slice associée à un contexte de protocole de données en paquets, PDP,
entre l'UE (106) et le premier réseau cellulaire (100) ;
la détermination d'une information correcte d'assistance à la sélection de slice de réseau unique, S-NSSAI, pour le contexte de PDP, au moins en partie sur la base d'au moins l'une d'entre l'information relative à la slice reçue dans le message de connectivité de PDN et une logique de cœur dans le premier réseau cellulaire (100), la S-NSSAI correcte correspondant à une slice qui dessert de la façon la plus appropriée un type d'application qui est en cours d'exécution sur l'UE (106), et où :
lorsqu'une politique de sélection de route d'UE, URSP, contient une règle qui n'est pas par défaut pour le contexte de PDP entre l'UE (106) et le premier réseau cellulaire (100), ladite détermination de la S-NSSAI correcte est effectuée en fonction de la règle qui n'est pas par défaut de l'URSP, l'information relative à la slice étant la S-NSSAI correcte ;
lorsque la URSP ne contient pas de règle qui n'est pas par défaut pour le contexte de PDP entre l'UE (106) et le premier réseau cellulaire (100), et lorsque le contexte de PDP est associé à un service relatif à une slice produite par un client de slice de réseau spécifique, NSC, ladite détermination de la S-NSSAI correcte est effectuée en fonction d'un identifiant du NSC, l'information relative à la
slice étant l'identifiant du NSC ; et
la transmission à l'UE de la S-NSSAI correcte.

8. Le procédé de la revendication 7, dans lequel la S-NSSAI correcte est utilisable pour le moment où l'UE (106) opère une transition vers un second réseau cellulaire qui ne supporte pas le slicing de réseau.

9. Le procédé de la revendication 8, dans lequel le premier réseau cellulaire est un réseau 4G et dans lequel le second réseau cellulaire est un réseau 5G.

10. Le procédé de la revendication 7, dans lequel le dispositif de réseau est configuré pour transmettre à l'UE la S-NSSAI correcte dans un message de requête d'activation de contexte de bearer de EPS par défaut.

11. Un support de stockage non transitoire lisible par calculateur stockant des instructions de programme exécutables par au moins un processeur pour faire en sorte qu'un équipement utilisateur, UE, mette en œuvre les procédés de l'une de revendications 1 à 6.

12. Un appareil comprenant :
au moins un processeur configuré pour faire en sorte qu'un équipement utilisateur, UE, mette en œuvre le procédé de l'une des revendications 1 à 6.

13. L'appareil de la revendication 12, comprenant en outre :
une radio couplée de manière opérante à l'au moins un processeur.

14. Un appareil comprenant :
au moins un processeur configuré pour faire en sorte qu'un dispositif de réseau configuré pour une utilisation dans un premier réseau cellulaire qui ne supporte pas le slicing de réseau mette en œuvre le procédé de l'une des revendications 7 à 10.

15. L'appareil de la revendication 14, comprenant en outre :
une ou plusieurs antennes ; et
une circuiterie émettrice-réceptrice couplée de manière opérante à l'au moins un processeur.
